# EUROPEAN PATENT SPECIFICATION

(11) **EP 2 572 358 B1**
(45) Date of publication and mention of the grant of the patent: **22.07.2015**
(21) Application number: 10725302.3
(22) Date of filing: 17.05.2010
(51) Int. Cl.: G11B 20/00, H04N 21/4147, G11B 27/10, H04N 5/76

(54) **Selective display of the title of video programs by localisation and context aware tagging for parental control.**
Selektives Anzeigen von Titeln von Videoprogrammen unter Verwendung von Ort- und Kontext- Etiketten zwecks Jugendschutz.
Affichage sélectif de programmes video via des étiquettes contextuelles et de localisation pour contrôle parental.

(43) Date of publication of application: 27.03.2013
(73) Proprietor: Thomson Licensing, 92443 Issy-les-Moulineaux (FR)
(72) Inventor: HAILEY, James, Edwin, Indianapolis, Indiana 46236 (US)
(74) Representative: Aumonier, Sebastien
(86) International application number: PCT/US2010/001449
(87) International publication number: WO 2011/146039

(56) References cited:
- WO-A1-96/34491
- US-A1- 2002 092 021
- US-A1- 2003 014 750
- US-A1- 2003 231 859
- "ETSI TS 101 812 V1.1.1; Digital Video Broadcasting (DVB); Multimedia Home Platform (MHP) Specification 1.0", 20000701, 1 July 2000 (2000-07-01), pages 49-56,115, XP002209515,

## Description

### Background of the Invention

### Technical Field

This invention relates to the field of digital video recorders (DVRs). More particularly, this invention relates to selectively including programs in a listing of programs available through a digital video recorder (DVR).

### Description of Related Art

Digital Video Recorder (DVRs) and Home Media DVRs are common devices in the home. Network DVRs are also popular with some service providers since they reduce the cost of customer premises equipment. However, this technology comes with new parental control issues since program titles listed in menus can be viewed by others in the household either at the DVR or other display devices in the home.

With a DVR, programs can be recorded and played back at the convenience of the consumer. Once a program is recorded, the consumer can easily find the desired program by viewing a user interface menu having a listing of programs available through the DVR. Additional information such as description, rating, actors, and length can also be provided. Much of the popularity of the DVR is due to the listing of available programs which help the consumer choose desired programming. With a Home Media DVR or Network DVR, the consumer can view the listing of available programs from a number of display devices in the home. This is very convenient; however, it also creates parental control problems since anyone in the household can view the listing of available programs which can include programs that are inappropriate for certain members of the household.

WO 96/34491 defines an electronic program guide with a scheduling system and parental control. The user tags certain programs in a menu for permitting or prohibiting access. An access code enables reproduction of restricted programs whose titles are shown in a list. If a particular channel is included in the channel preference list, it will not be displayed, nor its corresponding schedule information.

US 2003/231859 defines a personal video recorder (PVR) wherein, for programs tagged "visible", program associated information (title, genre, description) is shown in the menu listing of programs stored in the PVR.

In some systems, a rating limit is used to prevent DVR content from being viewed; however, ratings limits can be difficult to use and would not prevent access to programs that have appropriate ratings (such as PG) but is still contain potentially objectionable subject matter. Furthermore, most of these systems only block access, so programs (which can have inappropriate or objectionable titles) still appear in the listing of programs available though the DVR. Since some programs can have inappropriate or objectionable
titles as well as content, it can be advantageous to be able to control which programs are included in listings of programs available through the DVR.

### Summary of the Invention

The invention is as defined by the appended claims.

### Brief Descrption of the Drawings

Figure 1A is a diagram depicting an embodiment of a DVR system typically operated and viewed from one location.
Figure 1B is a diagram depicting an embodiment of a DVR system that can be operated from operated from more than one location and can distribute content to more than one location.
Figure 1C is a diagram depicting an embodiment of a DVR system in which the content is stored and accessed remotely.
Figure 2 is a block diagram depicting the elements of a system in accordance with one embodiment.
Figure 3 is a flow diagram illustrating a methodology in accordance with one embodiment.
Figure 4A is a flow diagram illustrating additional steps of a methodology in accordance with an example.
Figure 4B is diagram depicting an on-screen menu relating to the flow diagram of Figure 4A.
Figure 5A is a flow diagram illustrating additional steps of a methodology in accordance with another embodiment.
Figure 5B is diagram depicting an on-screen menu relating to the flow diagram of Figure 5A.

### Detailed Description

The methodologies, systems and teachings disclosed herein can be embodied in or as a digital video recorder (DVR) that is capable of selectively listing programming available thru the DVR. The selective listing can involve omitting selected programs from the listing of available programs or only including selected programs in the listing of available programs. The selective listing of programs does not mean that an omitted program is blocked or otherwise not available though the DVR, but merely the title of the program is not included in the listing of available programs presented to a user.

In the examples described herein, the term "digital video recorder" or "DVR" is used for the device that provides the functionality of the invention. The term DVR is meant to include all such devices or software that are capable of recording, storing, and displaying or otherwise outputting programs. This includes Personal Video Recorders (PVRs), media servers, personal computers (PCs), or the like.

The term "program" is used herein to refer to television shows, movies, music, sports or music events, podcasts, or any other content provided by content providers that can be recorded, stored, streamed, and displayed or otherwise outputted by a DVR.

The term "listing of programming available through the DVR" is used herein to refer to the on-screen listing of programs that have been recorded and are available for playback, on-screen listing of programs available for download or streaming through the DVR, on-screen program guides listing upcoming programs, or any other on-screen menu that can display titles of programs that can be recorded, stored, streamed, or viewed using the DVR.

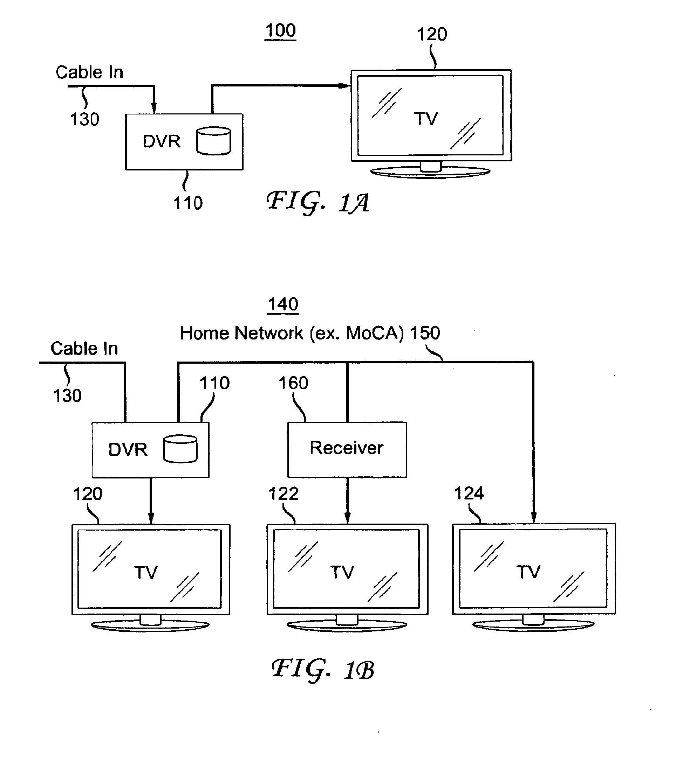

Figure 1A depicts one environment 100 in which a DVR with the functionality described herein can be employed. At its heart is a DVR 110. In this embodiment, the DVR 110 is connected to a user's display device and/or audio system 120 such as a television. The connection between the DVR and the television can be a coaxial, RCA, HDMI or other type of audio visual (AV) connection.

The DVR 110 is configured to receive programs from one or more sources. For example the DVR 110 can be configured to receive programs over cable 130 from a cable provider. In another embodiment, the DVR 110 could be part of a satellite system that receives programs from a satellite. In another embodiment, the DVR 110 can be configured to receive programs over the air from an antenna. In another embodiment, the DVR 110 can receive programs over a network. In yet another embodiment, the DVR 110 can be configured to receive programs from any combination of sources. It should be understood that these sources of broadcast streams are merely illustrative; other possible sources for broadcast streams will be apparent to one skilled in the art given the benefit of this disclosure.

In the embodiment of Figure 1A the DVR110 is a set top box designed to be connected to a user's display device and audio system 120 such as a television and stereo system for outputting content received from a content provider. However, in other embodiments, the consumer electronics device 110 can be a stand-alone device that includes its own video and audio reproduction capabilities, which does not need to be connected to a user's display device and/or audio system 120. In still other embodiments the DVR 110 can be centrally located and distribute content to one or more remotely located display devices 120.

Figure 1B depicts another environment 140 in which a DVR with the functionality described herein can be employed. In this example the DVR 110 is part of a home network 150. For example, the DVR 110 could be implemented as or part a gateway device that acts as a central distribution hub for television and/or internet services. As with Figure 1A, the DVR 110 is configured to receive programs from one or more sources, such as cable 130. However, in this example, the DVR 110 is connected to multiple display devices and/or audio systems 120, 122, 124.

In the example of Figure 1B, the DVR 110 is connected to the first display device and/or audio system 120 in a conventional manner such as described in Figure 1A. The DVR 110 is connected to the second 122 and third 124 display devices and/or audio systems over a home network 150. In the depicted system the second display device 122 is interfaced with the home network 150 using a set top box 160 while the third display device 124 is connected directly to the home network 150. In the case of the second display device 122, the set top box 160 is connected to second display device 122 in a conventional manner using a coaxial, RCA, HDMI, or other AV connection and connected to the DVR 110 using a network connection. In the case of the third display device 124, a conventional coaxial, RCA, HDMI, or other AV connection is not used as the third display device 124 has a network connection. Examples of suitable networks include Ethernet or multimedia over coaxial (MoCa) networks. Other types of suitable home networks will be apparent to one skilled in the art given the benefit of this disclosure. In this configuration, for the remotely located display device 122 and 124, the commands to control the DVR 110 are received by the set top box 140 or display device 124 and are conveyed to the DVR 110 over the home network 150.

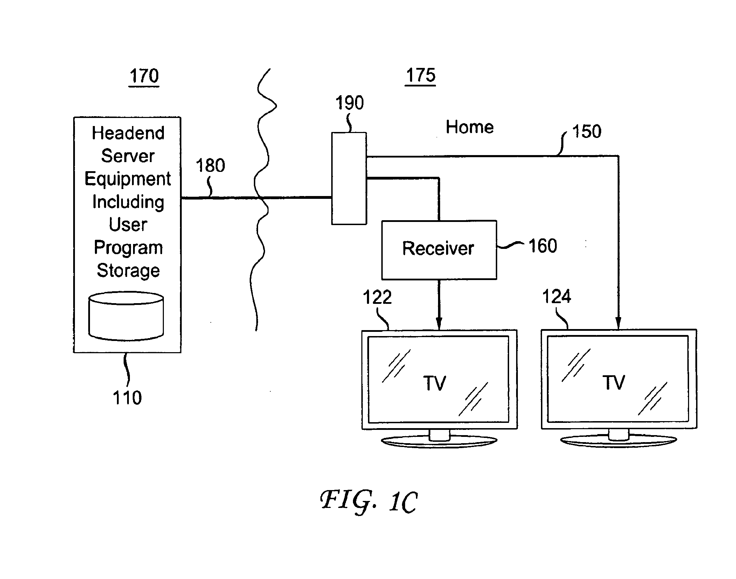

Figure 1C depicts another embodiment of a network DVR 110 wherein the DVR110 is located outside the user's home 175. In this example the DVR 110 is part of head-end server equipment 170 located in the service provider's facilities. The DVR 110 is connected over a broadband connection 180 to the user's home 175 through a hub or gateway device 190 that is configured to interface with the DVR 110 remotely.

The gateway device 190 is in turn connected to set top box 160 or display device 124 over a home network 150 such as Ethernet or MoCa network similar to Figure 1B. In this configuration the commands to control the DVR 110 are received by the set top box 140 or display device 124 and are conveyed to the gateway device 190 over the home network 150. The gateway device in turn conveys the commands to the DVR 110 over the broadband connection 180.

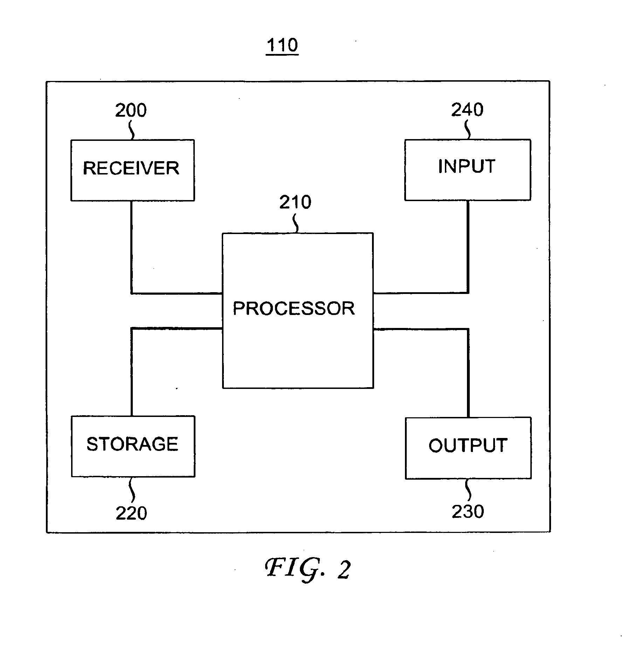

Figure 2 is a block diagram depicting the elements of DVR 110 in accordance with one embodiment. In this embodiment, the DVR 110 comprises a receiver 200, a processor 210, storage 220, and an output interface 230. In some embodiments, the consumer electronics device can further include an input interface 240. Each of these elements will be discussed in more detail below.

The receiver 200 is configured to receive content such as programs. The programs can be provided on channels or streams that are part of broadcast or internet content from content providers. The type and configuration of the receiver depends on the source and format of the content. As such, the receiver can be configured to receive satellite digital broadcasts, over-the-air digital broadcasts, cable digital broadcasts, internet streams or any combination thereof. The receiver allows the consumer electronic device 110 to access and decode the various channels and programs that are provided as part of the received content. As such, the receiver can contain one or more tuners to tune in or otherwise decode the various channels or streams that are provided as part of the received content. In the case of multiple tuners, the tuners can be for tuning in multiple different channels or streams from a single source, or different channels or streams from different channels or streams.

The processor 210 controls the operation of the DVR 110. The processor runs the software that operates the DVR 110 as well as provides the functionality of the selective listing of this disclosure. This includes receiving a selection of a program, tagging the received selected program, and selectively including the tagged program in a listing of programs available through the DVR. The processor 210 is connected to the receiver 200, storage 220, output interface 230, and, in some embodiments, input interface 240, and handles the transfer and processing of information between these elements. The processor 210 can be general processor or a processor dedicated for a specific functionality. In certain embodiments there can be multiple processors.

The storage 220 is where the software and other information used by the consumer electronics device are stored. The storage 220 can include volatile memory (RAM), nonvolatile memory (EEPROM), magnetic media (hard drive), optical media (CD/DVD-Rom), or flash based storage. In certain embodiments the storage 220 will typically include memory as well as large capacity storage such as a hard-drive. The hard drive is where programs recorded on the DVR 110 are stored.

The output interface 230 is configured to provide the programs available through the DVR in the correct format for outputting on a video display or audio device. This content can include programs recorded and stored on the DVR 110 and streams or other internet programs available through the DVR 110. The proper format can include the codec for the content to be output as well as the connector type used to connect to an external video display device or audio device or in some embodiments, the onboard display or speakers. The output interface 230 can also provide the graphics and menus used to indicate the content, and information about the content, available on the consumer electronic device 110. In certain embodiments, the output interface 230 includes network connectivity for connecting the DVR to remotely located set top boxes, gateways, and display devices over a home network and/or the internet as described in regards to Figures 1B and 1C.

In some embodiments the DVR 110 can further include an input interface 240. The user interface 240 allows the user to interact with the DVR 110. The input interface 240 allows selections of programs to be selectively displayed to be received by DVR 110. The user interface 240 also allows for the selection of content available on the consumer electronic device 110 for playback and the entering of authorization for the display of tagged programs. The user interface 240 can also handle the interfacing with the various devices that can be used to input information, such a remotes, keyboards, etc. In certain devices the input interface can include network connectivity for connecting the DVR remotely located set top boxes, gateways, and display devices over a home network and/or the internet as described in regards to Figures 1B and 1C.

It should be understood that the elements set forth in Figure 2 are illustrative. The consumer electronic device 110 can include any number of elements and certain elements can provide part or all of the functionality of other elements. For example, the much of the functionality of the receiver 200, output interface 230, and input interface 240 can be performed by the processor 210 or multiple general or dedicated processors. Likewise, network connectively can be implemented separate from either the output interface 230 or the input interface 240. Other possible implementation will be apparent to on skilled in the art given the benefit of this disclosure.

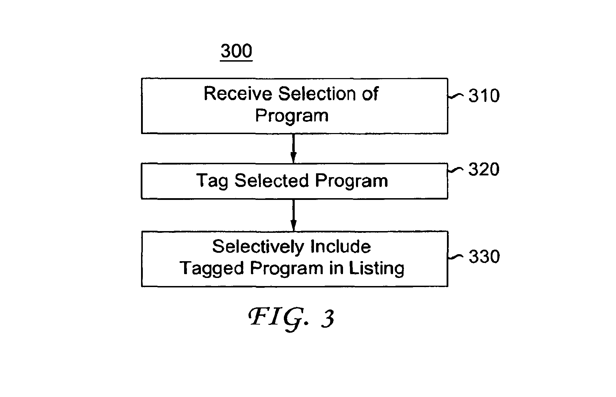

Figure 3 is a flow diagram depicting a method 300 for selectively displaying titles of available programs in a DVR in accordance with one embodiment. At its most basic, the method involves three steps. The first step is receiving a selection of a program available though the DVR (step 310). The selected program is then tagged (step 320). Finally, the tagged program is selectively included in a listing of program available through the DVR (step 330). Each of these steps will be discussed in more detail below.

In step 310, a selection of a program available through the DVR 110 is received. Programs available through the DVR can include programs that have been recorded, programs that can be streamed or downloaded through the DVR, and even regularly scheduled programs. In certain embodiments, the selection of a program can be provided by a user based on a displayed listing of available programs through the DVR 110 via the user interface. For example the program can be a program that has been previously recorded on the DVR 110 and is displayed in an on-screen listing of recorded program. Alternately, the program can be an upcoming program that is displayed in the program guide. In another embodiment, the program can be a streamed or downloadable program displayed as additional programs available through the DVR 110.

The selection of the program can be received by a user directly, for example thru on-screen menus. Alternately, the selection of program available through the DVR can be based on provided listings or criteria. For example, a listing of programs that are unsuitable for children can be supplied by consumer watch groups that can be downloaded or otherwise inputted to the DVR 110. In another embodiment, selection of programs can be made by the DVR 110 based on the rating, subject matter, or keywords.

Once the selection of a program is received (in step 310) the selected program is then tagged (step 320). The tagging can be automatic upon receiving the selection of a program. Alternatively, the tagging can be selected by the user, for example though a menu of an on-screen display. The tag associated with the program indicates how the program should be handled in listing of programs available thru the DVR 110. In one embodiment the tag indicates that the program is restricted meaning the title of the program is not suitable for general viewing. For example, a mature themed program can be tagged as private indicating that the title of the mature themed program should not be displayed in a general listing of titles available through the DVR 110 where any person might view it.

Conversely the tag can indicate that the program is preferred meaning that the title of the program is a preferred title for display in a listing. For example, a preferred tag can used to tag a program suitable for children, wherein the listing of programming available through the DVR 110 can only list programming tagged as preferred.

In other examples, the tag associated with a program can indicate a specific listing of programs that the tagged program should be included in. For example, a program can be tagged to indicate that should be included in a listing of programs for a particular user. Thus, a user "Dave" could have a program tagged to be included in a listing of programs "Dave's Programs." In other embodiments, such as the example of Figure 1B or 1C, where multiple display devices 120, 122, and 124 are connected to the DVR 110; a program can be tagged to indicate what display device 120, 122, 124 can display the title of the tagged program. Thus, certain programs could be tagged so as to only appear on a bedroom television, with other programs could be tagged so as to only appear on the family room television. Other possible tagging will be apparent to on skilled in the art given the benefit of this disclosure.

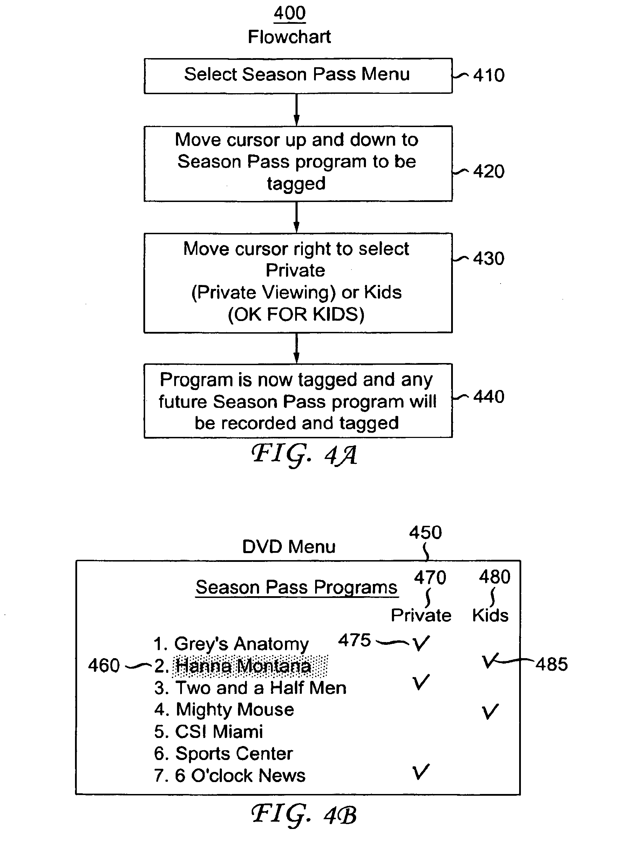

The tagging of programs can be contextual; that is tagging can be implemented depending on how a program is selected. Figures 4A and 4B show one examples of the inter-workings of the steps of receiving a selection of a program (step 310) and tagging the selected program (step 320). Figure 4A depicts a flow diagram 400 of the process of how a selected program is tagged using the onscreen season pass menu 450 of Figure 4B. After the season pass menu 450 is selected (step 410), the cursor 460 is moved up or down in the menu 450 to select a season pass program to be tagged (step 420). In this case, the program "Hanna Montana" has been selected using the cursor 460. The cursor can then be moved right or left to select the type of tagging desired (step 430). In this case the options for tagging are "Private" 470 or "Kids" 480. The "Private" tag indicates the program title is for private viewing only. The "Kids" tag indicates that the title of the program is OK for kids to view. Once a desired option is selected (step 430) the program is tagged. In the example of Figure 4B, the tagging of programs is indicated by a check mark, thus check mark 475 indicates that the program "Grey's Anatomy" has been tagged as "Private" and check mark 485 indicates that the program "Hanna Montana" has been tagged as "Kids." In this example, since the menu 450 used to select and tag the programs is the season pass menu, all future recording of the programs listed will be tagged accordingly. Thus all future recordings of "Grey's Anatomy" will be tagged "Private" and all future recording of "Hanna Montana" will be tagged "Kids."

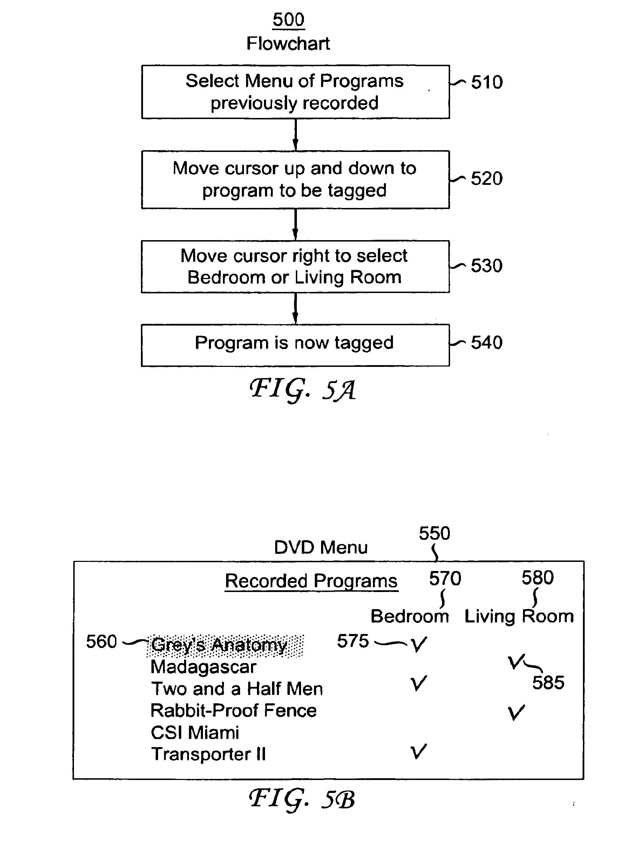

Figures 5A and 5B show another embodiment of the inter-workings of the steps of receiving a selection of a program (step 310) and tagging the selected program (step 320). Figure 5A depicts a flow diagram 500 of the process of how a selected program is tagged using the onscreen recorded programs menu 550 of Figure 4B. After the recorded program menu 550 is selected (step 510), the cursor 560 is moved up or down in the menu 550 to select a season pass program to be tagged (step 520). In this case, the program "Grey's Anatomy" has been selected using the cursor 560. The cursor can then be moved right or left to select the type of tagging desired (step 530). In this case the options for tagging are "Bedroom" 570 or "Living Room" 580. The "Bedroom" tag indicates the program title is should only be viewable on the display device located in the bedroom. The "Living Room" tag indicates that the titles of the program only be viewable on the display in the living room. Once a desired option is selected (step 530) the program is tagged. In the example of Figure 5B, the tagging of programs is indicated by a check mark, thus check mark 575 indicates that the program "Grey's Anatomy" has been tagged as "Bedroom" and check mark 585 indicates that the program "Madagascar" has been tagged as "Living Room." In this example, since the menu 550 used to select and tag the programs is the recorded program menu, just the recorded programs listed will be tagged accordingly. Thus, all only the single episode of "Grey's Anatomy" recorded will be tagged, "Bedroom" and all future recording of "Grey's Anatomy" will be not be automatically tagged.

In some embodiments, the tagging of a program can require authorization. For example, parents may prefer to restrict the ability to tag a program. As such, the tagging of a program by a user as depicted in Figures 4A, 4B, 5A, and 5B can require that the user provide a password before the tagging can be performed. This can be implemented similarly to parental lock features currently found televisions and set top boxes. In another example, such as the example of Figure 1B or 1C, where multiple display devices 120, 122, and 124 are connected to the DVR 110; the DVR can be configured such that the tagging of a program can only be performed through designated devices such as set top box 160 or display device 124.

Referring back to Figure 3, after the selected program has been tagged (step 320), it can be selectively included in a listing of program available through the DVR 110. An example of a listing of available program though the DVR is the listing of the programs recorded on the DVR and available for playback. Another example of the listing of programs available through the DVR is the listing of "on-demand" movies that can be downloaded or streamed using the DVR. Whether or not a title of a program is displayed in such a listing depends on tag associated with the program.

In some embodiments, a title of a program can be omitted or otherwise excluded from a listing based on the tag associated with the program. An example of this is the case where the program has been tagged "private" such as with the program "Grey's Anatomy" in the embodiment of Figures 4A and 4B. Since the program "Grey's Anatomy" has been tagged as "Private" any recording of that program will not be included in a listing of programs available thru the DVR such as the listing of recorded programs in an on-screen display.

In other embodiments, a listing of programs available through the DVR can be comprised entirely of programs that have been tagged accordingly. An example of this is the case of the listing "Dave's Programs" wherein all the titles of programs listed in "Dave's Programs" have been tagged to be included in "Dave's Programs"

In some examples, the display of a tagged program in a listing of programs available through the DVR 110 can require authorization. For example, titles of programs tagged as "Private" can only be viewed upon the user providing a password. This can be implemented similarly to parental lock features currently found televisions and set top boxes.

In another embodiment, such as in Figure 1B or 1C, where multiple display devices 120, 122, and 124 are connected to the DVR 110; the DVR 110 can be configured certain tagged programs can only be viewed on designated devices such as set top box 160 or display device 124. For example, programs tagged "private" can only appear in a listing of programs available displayed on a designated display device which has been authorized to display the titled of tagged programs. Another example of this is the case of Figures 5A and 5B wherein programs can have been tagged "Living Room" or "Bedroom." Thus, the program "Grey's Anatomy" which has been tagged "Bedroom," as indicated by check 575, will only appear in a listing of available recorded programs displayed on a display device designated as being in the bedroom and the program "Madagascar" which has been tagged "Living Room," as indicated by check 585, will only appear in a listing of available recorded programs displayed on display device designated as being in the living room.

In still other examples, authorization can possess a temporal aspect. That is authorization to include or omit tagged programs depends on the time of day. Thus, in the case of Figures 4A and 4B wherein programs have been tagged as "Private" or "Kids" the inclusion or omission of such tagged programs can change based on the time of day. For example, in the hours between 5 A.M. and 8 P.M., when children are the primary user of the DVR, the displayed listing of available programs includes only the titles of programs tagged "Kids", however, after 8 P.M when the children are in bed, the displayed listing of available programs can include the titles of programs tagged "Private."

It should be understood that the set-up and management of the selective inclusion of the tagged programs in listings of available programs as well as authorizations, including passwords, designated devices, and temporal aspects can be performed by the user as needed. For example, on-screen menus can be provided to a user to configure or modify any of these aspects.

Accordingly, with this methodology selected and tagged programs can be omitted from the listing of programs available through the DVR. Conversely, selected and tagged programs can be exclusively displayed in the listing of programs available through the DVR.

While the example set forth above has focused on an electronic device, it should be understood that the present invention can also be embedded in a computer program product, which comprises all the features enabling the implementation of the methods described herein, and which, when loaded in a computer system, is able to carry out these methods. Computer program or application in the present context means any expression, in any language, code or notation, of a set of instructions intended to cause a system having an information processing capability to perform a particular function either directly or after either or both of the following a) conversion to another language, code or notation; b) reproduction in a different material form.

Additionally, the description above is intended by way of example only and is not intended to limit the present invention in any way, except as set forth in the following claims.

## Claims

1. A method, executed by a digital video recorder (DVR, 110), comprising receiving at least a selection of a program available through the digital video recorder (310) comprised in a home, **characterized in that** it further comprises:
tagging at least one selected program with a tag from which a viewing location in said home can be obtained; and
controlling a display of a title of said at least one selected program by devices connected to the digital video recorder that are positioned in viewing locations in said home according to said tag.

2. The method of claim 1, wherein tagging said at least one selected program further comprises tagging the program as restricted.

3. The method of claim 1, wherein tagging said at least one selected program further comprises tagging the program as preferred.

4. The method of claims 1, wherein said tagging is executed in response to an authorization.

5. The method claim 4, wherein the authorization is subject to a user providing a password.

6. The method of claim 4, wherein the authorization depends on the time of day.

7. The method of claim 1, wherein controlling comprises:
preventing a display of said title of said at least one tagged and selected program from the listing of titles of programs available through the digital video recorder for devices that have viewing locations in said home different from said viewing location in said home related to said tag.

8. The method of claim 1, wherein controlling comprises:
displaying only selected and tagged programs in the listing of programs available through the digital video recorder by devices that have viewing locations in said home equal to said viewing location in said home related to said tag.

9. A digital video recorder system (100, 140, 175) comprising a receiver (160, 200) for receiving at least one program content to be available through the digital video recorder comprised in a home, **characterized in that** it further comprises:
a processor (210) configured to receive at least a selection of a program, tag at least one selected program with a tag from which a viewing location in said home can be obtained, and control a display of a title of said at least one selected program by devices connected to the digital video recorder that are positioned in viewing locations in said home according to said tag;
storage (220) for storing program and tagged program information.

10. The digital video recorder system of claim 9, further comprising an input interface for receiving input from a user.

11. The digital video recorder system of claim 10, wherein the input interface is further configured to receive authorization for selectively including a tagged program in a listing of programs available through the DVR.

12. The digital video recorder system of claim 9 wherein processor is configured to prevent a display of a title of said at least one selected and tagged program from the listing of titles of programs available through the digital video recorder for devices that have viewing locations in said home different from said viewing location in said home related to said tag.

13. The digital video recorder system of claim 9, wherein the processor is configured to display only selected and tagged programs in the listing of programs available through the digital video recorder by devices that have viewing locations in said home equal to said viewing location in said home related to said tag.

## Patentansprüche

1. Verfahren, das durch einen digitalen Videorecorder (DVR, 110) ausgeführt wird, wobei das Verfahren das Empfangen mindestens einer Auswahl eines Programms, das über den in einem Haushalt enthaltenen digitalen Videorecorder (310) verfügbar ist, umfasst, **dadurch gekennzeichnet, dass** das Verfahren ferner umfasst:
Markieren mindestens eines ausgewählten Programms mit einer Markierung, aus der ein Betrachtungsort in dem Haushalt erhalten werden kann; und
Steuern einer Anzeige eines Titels des mindestens einen ausgewählten Programms durch mit dem digitalen Videorecorder verbundene Vorrichtungen, die an Betrachtungsorten in dem Haushalt in Übereinstimmung mit der Markierung positioniert sind.

2. Verfahren nach Anspruch 1, wobei das Markieren des mindestens einen ausgewählten Programms ferner das Markieren des Programms als beschränkt umfasst.

3. Verfahren nach Anspruch 1, wobei das Markieren des mindestens einen ausgewählten Programms ferner das Markieren des Programms als bevorzugt umfasst.

4. Verfahren nach Anspruch 1, wobei das Markieren in Ansprechen auf eine Berechtigung ausgeführt wird.

5. Verfahren nach Anspruch 4, wobei die Berechtigung davon abhängig ist, dass der Nutzer ein Kennwort bereitstellt.

6. Verfahren nach Anspruch 4, wobei die Berechtigung von der Tageszeit abhängt.

7. Verfahren nach Anspruch 1, wobei das Steuern umfasst:
Verhindern einer Anzeige des Titels des mindestens einen markierten und ausgewählten Programms in der Auflistung von Titeln von über den digitalen Videorecorder verfügbaren Programmen für Vorrichtungen, die Betrachtungsorte in dem Haushalt besitzen, die von dem Betrachtungsort in dem Haushalt in Bezug auf die Markierung verschieden sind.

8. Verfahren nach Anspruch 1, wobei das Steuern umfasst:
Anzeigen nur ausgewählter und markierter Programme in der Auflistung von über den digitalen Videorecorder verfügbaren Programmen durch Vorrichtungen, die Betrachtungsorte in dem Haushalt besitzen, die gleich dem Betrachtungsort in dem Haushalt in Bezug auf die Markierung sind.

9. Digitales Videorecordersystem (100, 140, 175), das einen Empfänger (160, 200) zum Empfangen mindestens eines Programminhalts, damit er über den in einem Haushalt enthaltenen digitalen Videorecorder verfügbar ist, umfasst, **dadurch gekennzeichnet, dass** das System ferner umfasst:
einen Prozessor (210), der dafür konfiguriert ist, mindestens eine Auswahl eines Programms zu empfangen, mindestens ein ausgewähltes Programm mit einer Markierung zu markieren, aus der ein Betrachtungsort in dem Haushalt erhalten werden kann, und eine Anzeige eines Titels des mindestens eines ausgewählten Programms durch mit dem digitalen Videorecorder verbundene Vorrichtungen, die an Betrachtungsorten in dem Haushalt in Übereinstimmung mit der Markierung positioniert sind, zu steuern;
eine Ablage (220) zum Speichern von Programminformationen und markierten Programminformationen.

10. Digitales Videorecordersystem nach Anspruch 9, das ferner eine Eingabeschnittstelle zum Empfangen einer Eingabe von einem Nutzer umfasst.

11. Digitales Videorecordersystem nach Anspruch 10, wobei die Eingabeschnittstelle ferner dafür konfiguriert ist, eine Berechtigung zum wahlweisen Aufnehmen eines markierten Programms in eine Auflistung von über den DVR verfügbaren Programmen zu empfangen.

12. Digitales Videorecordersystem nach Anspruch 9, wobei der Prozessor dafür konfiguriert ist, eine Anzeige eines Titels des mindestens einen ausgewählten und markierten Programms in der Auflistung von Titeln von über den digitalen Videorecorder verfügbaren Programmen für Vorrichtungen, die Betrachtungsorte in dem Haushalt besitzen, die von dem Betrachtungsort in dem Haushalt in Bezug auf die Markierung verschieden sind, zu verhindern.

13. Digitales Videorecordersystem nach Anspruch 9, wobei der Prozessor dafür konfiguriert ist, in der Auflistung von über den digitalen Videorecorder verfügbaren Programmen durch Vorrichtungen, die Betrachtungsorte in dem Haushalt besitzen, die gleich dem Betrachtungsort in dem Haushalt in Bezug auf die Markierung sind, nur ausgewählte und markierte Programme anzuzeigen.

## Revendications

1. Un procédé, exécuté par un enregistreur vidéo numérique (DVR, 110) comprenant la réception d'au moins une sélection d'un programme disponible par le biais de l'enregistreur vidéo numérique (310) compris dans une habitation, **caractérisé en ce qu'**il comprend en outre :
l'étiquetage d'au moins un programme sélectionné avec une étiquette à partir de laquelle un emplacement de visionnage dans ladite habitation peut être obtenu ; et
le contrôle d'un affichage d'un titre dudit au moins un programme sélectionné par des dispositifs connectés à l'enregistreur vidéo numérique qui sont positionnés dans des emplacements de visionnage dans ladite habitation selon ladite étiquette.

2. Le procédé de la revendication 1, dans lequel l'étiquetage d'au moins un programme sélectionné comprend en outre l'étiquetage du programme tel qu'il est restreint.

3. Le procédé de la revendication 1, dans lequel l'étiquetage dudit au moins un programme sélectionné comprend en outre l'étiquetage du programme préférentiel.

4. Le procédé de la revendication 1, dans lequel ledit étiquetage est exécuté en réponse à une autorisation.

5. Le procédé de la revendication 4, dans lequel l'autorisation est soumise à la fourniture d'un mot de passe par un utilisateur.

6. Le procédé de la revendication 4, dans lequel l'autorisation dépend de l'heure de la journée.

7. Le procédé selon la revendication 1, dans lequel le contrôle comprend :
la prévention de l'affichage dudit titre dudit au moins un programme étiqueté et sélectionné dans la liste des titres de programmes disponibles dans l'enregistreur de vidéo numérique pour des dispositifs qui disposent d'emplacements de visionnage dans ladite habitation différents dudit emplacement de visionnage dans ladite habitation lié à ladite étiquette.

8. Le procédé de la revendication 1, dans lequel le contrôle comprend :
l'affichage des seuls programmes sélectionnés et étiquetés dans la liste des programmes disponibles dans l'enregistreur vidéo numérique par le biais des dispositifs qui disposent d'emplacements de visionnage dans ladite habitation comme ledit emplacement de visionnage dans ladite habitation lié à ladite étiquette.

9. Un système d'enregistreur vidéo numérique (100, 140, 175) comprenant un récepteur (160, 200) permettant de recevoir au moins un contenu de programme rendu disponible sur l'enregistreur vidéo numérique compris dans une habitation, **caractérisé en ce qu'**il comprend en outre :
un processeur (210) configuré pour recevoir au moins une sélection d'un programme, étiqueter au moins un programme sélectionné avec une étiquette à partir de laquelle un emplacement de visionnage dans ladite habitation peut être obtenu, et commander un affichage d'un titre dudit au moins un programme sélectionné par des dispositifs connectés à l'enregistreur vidéo numérique qui sont positionnés dans des emplacements de visionnage dans ladite habitation selon ladite étiquette.
stockage (220) permettant de stocker le programme et les informations relatives au programme étiqueté.

10. Le système d'enregistreur vidéo numérique de la revendication 9, comprenant en outre une interface d'entrée permettant de recevoir une entrée d'un utilisateur.

11. Le système d'enregistreur vidéo numérique de la revendication 10, dans lequel l'interface d'entrée est en outre configurée pour recevoir une autorisation permettant d'inclure de manière sélective un programme étiqueté dans une liste de programmes disponibles via le DVR.

12. Le système d'enregistrement vidéo numérique de la revendication 9 ; dans lequel le processeur est configuré pour empêcher un affichage d'un titre dudit au moins un programme sélectionné et étiqueté provenant d'une liste de titres de programmes accessibles par le biais de l'enregistreur vidéo numérique pour des dispositifs qui disposent d'emplacements de visionnage dans ladite habitation différents dudit emplacement de visionnage dans ladite habitation lié à ladite étiquette.

13. Le système d'enregistrement vidéo numérique de la revendication 9, dans lequel le processeur est configuré pour afficher uniquement les programmes sélectionnés et étiquetés dans la liste de programmes disponibles par le biais de l'enregistreur vidéo numérique par des dispositifs qui disposent d'emplacement de visionnage dans ladite habitation comme dans ledit emplacement de visionnage dans ladite habitation lié à ladite étiquette.
